# EUROPÄISCHE PATENTSCHRIFT

(11) **EP 2 964 443 B1**
(45) Veröffentlichungstag und Bekanntmachung des Hinweises auf die Patenterteilung: **10.05.2017**
(21) Anmeldenummer: 14723818.2
(22) Anmeldetag: 14.05.2014
(51) Int. Cl.: B29C 45/14

(54) **MASCHINE ZUR BEARBEITUNG VON WERKSTÜCKEN, INSBESONDERE BLECHTAFELN**
MACHINE FOR PROCESSING WORKPIECES, IN PARTICULAR SHEET-METAL PLATES
MACHINE DE TRAITEMENT DE PIÈCES, EN PARTICULIER DE PLAQUES DE TÔLE

(43) Veröffentlichungstag der Anmeldung: 13.01.2016
(73) Patentinhaber: NAP automotive Produkte GmbH, 75181 Pforzheim (DE)
(72) Erfinder: BORT, Peter, 75015 Bretten (DE)
(74) Vertreter: Hoeger, Stellrecht & Partner Patentanwälte mbB
(86) Internationale Anmeldenummer: PCT/EP2014/059891
(87) Internationale Veröffentlichungsnummer: WO 2015/172829

(56) Entgegenhaltungen:
- DE-A1- 19 729 486
- US-A1- 2009 008 815

## Beschreibung

Die Erfindung betrifft eine Maschine zur Bearbeitung von Werkstücken, insbesondere Blechtafeln, mit einer Stanzeinheit, die mindestens ein in vertikaler Richtung auf und ab bewegbares Stanzwerkzeug aufweist und einen Stanzbearbeitungsbereich definiert, und mit einer Spritzgießeinheit, die mindestens ein Spritzgießwerkzeug aufweist zum bereichsweisen Umspritzen des Werkstückes mit Kunststoffmaterial und die einen Spritzgießbearbeitungsbereich definiert, und mit einer Positioniereinrichtung zum Positionieren des Werkstücks im Stanzbearbeitungsbereich und im Spritzgießbearbeitungsbereich.

Mittels einer derartigen Maschine kann beispielsweise ein Stanzgitter hergestellt werden, das in elektronischen Baugruppen zum Einsatz kommt. Derartige Stanzgitter dienen der elektrischen Stromleitung. Sie bilden ein System elektrischer Leiter aus in Form von Metallstreifen, die eine komplexe Struktur ausweisen können. Hierbei kann vorgesehen sein, dass mehrere nebeneinander angeordnete Metallstreifen mit Hilfe einer Kunststoffummantelung relativ zueinander fixiert werden. Zur Erzielung der Kunststoffummantelung kommt üblicherweise eine Spritzgießmaschine zum Einsatz mit einem Spritzgießwerkzeug, das speziell an das in vorhergehenden Bearbeitungsschritten von der Stanzeinheit vollständig bearbeitete Werkstück angepasst ist. Die Stanzeinheit und die Spritzgießmaschine sind häufig zu einer Fertigungslinie verkettet, so dass das Werkstück zunächst in einem oder in mehreren aufeinander folgenden Bearbeitungsschritten gestanzt und anschließend in einem weiteren Bearbeitungsschritt umspritzt wird. Ein derartiger Herstellungsprozess ist mit hohen Werkzeugkosten verbunden und deshalb nur für Großserien geeignet.

Außerdem ist die Größe der bearbeitbaren Werkstücke durch die Größe der Werkzeuge limitiert.

Eine Maschine der eingangs genannten Art ist aus der Veröffentlichung DE 197 29 486 C2 bekannt. Mit ihrer Hilfe kann eine Leiterplatte hergestellt werden, die von einem isolierenden Kunststoffmaterial umspritzte Leiterbahnen aufweist. Die Maschine umfasst eine Stanzeinheit und eine Spritzgießeinheit. Ein zu bearbeitendes Werkstück wird in einem Stanzbearbeitungsbereich an einem ersten Formteil fixiert und anschließend von einem Stanzwerkzeug durch das erste Formteil hindurch bearbeitet. Das erste Formteil wird anschließend zusammen mit dem Werkstück durch eine Drehung um 180° in einen Spritzgießbearbeitungsbereich überführt und dort bereichsweise von Kunststoffmaterial umspritzt. Das erste Formteil bildet hierbei zusammen mit einem zweiten Formteil eine Spritzgießform aus. Anschließend wird das umspritzte Werkstück vom ersten Formteil und vom zweiten Formteil getrennt und die Bearbeitung mittels der Maschine ist abgeschlossen.

Die Stanzbearbeitung und das anschließende Umspritzen des Werkstücks erfolgen bei der bekannten Maschine in einer fest vorgegebenen Reihenfolge, wobei das erste Formteil nicht nur in Kombination mit dem zweiten Formteil eine Spritzgießform ausbilden muss, sondern das erste Formteil muss auch an die Stanzbearbeitung angepasst werden, denn das Stanzwerkzeug muss vorgegebene Durchgangskanäle des ersten Formwerkzeugs durchdringen können. Die Geometrie des Werkstücks ist somit durch die Ausgestaltung des Werkzeuges vorgegeben, insbesondere ist die Größe des Werkstücks durch die Größe des Werkzeugs limitiert. Soll eine andere Werkstückgröße zum Einsatz kommen, so müssen aufwändige und kostenintensive Umbaumaßnahmen durchgeführt werden.

Eine weitere gattungsbildende Maschine ist in der US2009/0008815 beschrieben.

Aufgabe der vorliegenden Erfindung ist es, eine Maschine der eingangs genannten Art derart weiterzubilden, dass das Werkstück kostengünstiger gestanzt und bereichsweise mit Kunststoffmaterial ummantelt werden kann, wobei die Größe des Werkstückes nicht durch die Größe der zum Einsatz kommenden Werkzeuge limitiert ist.

Diese Aufgabe wird bei einer Maschine der gattungsgemäßen Art erfindungsgemäß dadurch gelöst, dass die Maschine eine programmierbare Maschinensteuerung aufweist zur Steuerung der Stanzeinheit, der Spritzgießeinheit und der Positioniereinrichtung, und dass das mindestens eine Stanzwerkzeug um eine vertikale Drehachse drehbar ist zum Bearbeiten des Werkstücks in programmtechnisch vorgebbaren Drehstellungen, und dass das Werkstück mittels der Positioniereinrichtung in einer Horizontalebene in einer ersten Zustellrichtung und einer vorzugsweise senkrecht zur ersten Zustellrichtung ausgerichteten zweiten Zustellrichtung bewegbar ist, wobei das Werkstück in programmtechnisch vorgebbaren Horizontalstellungen im Stanzbearbeitungsbereich und im Spritzgießbearbeitungsbereich positionierbar und im programmtechnisch vorgebbaren, aufeinanderfolgenden Bearbeitungsschritten wiederholt von der Stanzeinheit und von der Spritzgießeinheit bearbeitbar ist.

Die erfindungsgemäße Maschine zur Bearbeitung von Werkstücken, insbesondere Blechtafeln, weist eine Stanzeinheit und eine in die Maschine integrierte Spritzgießeinheit auf. Mittels der Stanzeinheit kann das Werkstück in einem Stanzbearbeitungsbereich von dem mindestens einen Stanzwerkzeug bearbeitet werden, und mittels der Spritzgießeinheit kann das Werkstück in einem Spritzgießbearbeitungsbereich bereichsweise mit Kunststoffmaterial umspritzt werden. Das Werkstück kann wiederholt zwischen dem Stanzbearbeitungsbereich und dem Spritzgießbearbeitungsbereich hin und her bewegt und in programmtechnisch vorgebbaren Horizontalstellungen bearbeitet werden. Unabhängig von der Spritzgießeinheit kann im Stanzbearbeitungsbereich mittels der Stanzeinheit eine Stanzbearbeitung vorgenommen werden, und unabhängig von der Stanzeinheit kann im Spritzgießbearbeitungsbereich mittels der Spritzgießeinheit eine Spritzgießbearbeitung vorgenommen werden. Hierbei können im Stanzbearbeitungsbereich und im Spritzgießbearbeitungsbereich in programmtechnisch vorgebbarer Weise ein einziger Bearbeitungsschritt oder auch mehrere, aufeinander folgende Bearbeitungsschritte erfolgen. Beispielsweise kann vorgesehen sein, dass das Werkstück zunächst in mehreren, aufeinander folgenden Bearbeitungsschritten mit Hilfe des mindestens einen Stanzwerkzeuges gestanzt wird, wobei das Werkstück zwischen den einzelnen Bearbeitungsschritten mittels der Positioniereinrichtung in der ersten und/oder zweiten Zustellrichtung bewegt wird und das mindestens eine Stanzwerkzeug in den einzelnen Bearbeitungsschritten dieselbe oder auch unterschiedliche Drehstellungen einnehmen kann. Die Drehstellungen des Stanzwerkzeuges in den einzelnen Bearbeitungsschritten können programmtechnisch vorgegeben werden. Anschließend kann das Werkstück mittels der Positioniereinrichtung aus dem Stanzbearbeitungsbereich in den Spritzgießbearbeitungsbereich bewegt werden, so dass es in einem oder mehreren anschließenden programmtechnisch vorgebbaren Bearbeitungsschritten mittels des mindestens einen Spritzgießwerkzeuges bereichsweise mit Kunststoffmaterial umspritzt wird. In weiteren Bearbeitungsschritten kann dann das Werkstück mittels der Positioniereinrichtung wieder zurück in den Stanzbearbeitungsbereich bewegt werden, so dass nach der Bearbeitung mittels der Spritzgießeinheit eine weitere Bearbeitung mittels der Stanzeinheit erfolgen kann. Das einmalige oder mehrmalige Bewegen des Werkstückes zwischen dem Stanzbearbeitungsbereich und dem Spritzgießbearbeitungsbereich kann so lange erfolgen, bis das Werkstück vollständig bearbeitet ist. Dies ermöglicht es, mit relativ einfachen Stanz- und Spritzgießwerkzeugen eine komplexe Bearbeitungsstruktur zu erzielen. Die Werkzeugkosten können dadurch gering gehalten werden, so dass das Werkstück kostengünstig gestanzt und mit Kunststoffmaterial ummantelt werden kann. Darüber hinaus hat die erfindungsgemäße Maschine den Vorteil, dass die Größe des Werkstückes nicht durch die Größe der zum Einsatz kommenden Werkzeuge limitiert ist.

Bei der erfindungsgemäßen Maschine weist die Stanzeinheit mindestens ein Stanzwerkzeug auf, das um eine vertikale Drehachse drehbar ist. Das mindestens eine Stanzwerkzeug kann folglich unterschiedliche Drehstellungen relativ zum Werkstück einnehmen. Die Drehstellungen können programmtechnisch vorgegeben werden. In aufeinander folgenden Bearbeitungsschritten kann das Werkstück nacheinander mehrfach gestanzt werden, wobei das mindestens eine Stanzwerkzeug unterschiedliche Drehstellungen einnehmen kann und das Werkstück zwischen den einzelnen Bearbeitungsschritten in der Horizontalebene in der ersten Zustellrichtung und in der zweiten Zustellrichtung hin und her bewegt werden kann. Selbst bei Einsatz eines verhältnismäßig einfach geformten Stanzwerkzeuges kann somit eine komplexe Form aus dem Werkstück ausgestanzt werden, beispielsweise aus einer Blechtafel.

Zur Steuerung der Stanzeinheit, der Spritzgießeinheit und auch der Positioniereinrichtung weist die erfindungsgemäße Maschine eine programmierbare Maschinensteuerung auf. Mittels der Maschinensteuerung können unter anderem die Drehstellungen des mindestens einen Stanzwerkzeuges, die Horizontalbewegungen des Werkstückes und die Spritzgießbearbeitung programmtechnisch vorgegeben werden.

Insbesondere kann vorgesehen sein, dass die Maschine eine CNC-Steuerung aufweist, das heißt eine computergestützte numerische Steuerung (Computerized Numerical Control).

Die Anzahl der Bearbeitungsschritte ist bei der erfindungsgemäßen Maschine beliebig vorgebbar. Da das Werkstück mittels der Positioniereinrichtung in zwei vorzugsweise senkrecht zueinander ausgerichteten Zustellrichtungen hin und her bewegt werden kann und da das mindestens eine Stanzwerkzeug um eine vertikale Drehachse drehbar ist, können mittels der erfindungsgemäßen Maschine beliebige Stanzkonturen erzielt werden, wobei die Größe des Werkstückes nicht durch die Größe der zum Einsatz kommenden Werkzeuge limitiert ist. Eine bestimmte Stanzkontur kann durch eine programmtechnisch vorgebbare Sequenz aus Hubbewegungen des mindestens einen Stanzwerkzeuges, das zwischen den einzelnen Hüben unterschiedliche Drehstellungen einnehmen kann, und Relativbewegungen des Werkstücks relativ zum Stanzwerkzeug erzielt werden. Das Werkstück ist bei der erfindungsgemäßen Maschine relativ zur Stanzeinheit und auch relativ zur Spritzgießeinheit bewegbar.

Bei einer vorteilhaften Ausführungsform der erfindungsgemäßen Maschine weist die Stanzeinheit mindestens zwei Stanzwerkzeuge auf, die in vertikaler Richtung auf und ab bewegbar und zwischen einer Betriebsstellung und einer Außerbetriebsstellung hin und her bewegbar sind und die jeweils um eine vertikale Drehachse drehbar sind zum wahlweisen Bearbeiten des Werkstückes in programmtechnisch vorgebbaren Drehstellungen. Eine derartige Ausgestaltung der erfindungsgemäßen Maschine hat den Vorteil, dass zwei unterschiedlich geformte Stanzwerkzeuge zum Einsatz kommen können für die Bearbeitung des Werkstückes. Das jeweils zum Einsatz kommende Werkstück kann aus einer Außerbetriebsstellung in eine Betriebsstellung bewegt werden, die Bearbeitung erfolgt dann durch eine Hubbewegung des Werkzeuges in vertikaler Richtung. Beide Stanzwerkzeuge können darüber hinaus unterschiedliche programmtechnisch, das heißt durch Programmierung der Maschinensteuerung, vorgebbare Drehstellungen einnehmen, indem sie jeweils um eine vertikale Drehachse drehbar sind. Dies erlaubt die Herstellung einer komplexen Stanzstruktur, indem das Werkstück in vorgebbaren, aufeinander folgenden Bearbeitungsschritten relativ zur Stanzeinheit bewegt und wahlweise das eine oder das andere Stanzwerkzeug in einer gewünschten Drehstellung zum Einsatz kommt.

Günstigerweise ist mindestens ein Stanzwerkzeug der Stanzeinheit austauschbar durch ein von der Maschinensteuerung steuerbares Biege- oder Tiefziehwerkzeug, denn dies ermöglicht die Herstellung dreidimensionaler Werkstücke.

Von Vorteil ist es, wenn das mindestens eine Spritzgießwerkzeug um eine vertikale Drehachse drehbar ist zum bereichsweisen Umspritzen des Werkstückes in einer von mehreren programmtechnisch vorgebbaren Drehstellungen. Bei einer derartigen Ausgestaltung kann nicht nur das mindestens eine Stanzwerkzeug sondern auch das mindestens eine Spritzgießwerkzeug wahlweise eine von mehreren Drehstellungen einnehmen, die von der Maschinensteuerung vorgebbar sind. Dies erlaubt es, das Werkstück in mehreren Bereichen nacheinander mit Kunststoffmaterial zu ummanteln, wobei die Bereiche unterschiedlich ausgerichtet sein können. Die Ausrichtung der Bereiche kann durch eine entsprechende Programmierung der Maschinensteuerung vorgegeben werden.

Bevorzugt ist das mindestens eine Spritzgießwerkzeug um die vertikale Drehachse kontinuierlich drehbar.

Günstig ist es, wenn die Spritzgießeinheit mindestens zwei Spritzgießwerkzeuge aufweist, die zwischen einer Betriebsstellung und einer Außerbetriebsstellung hin und her bewegbar sind zum wahlweisen Umspritzen eines Werkstückbereiches. Dies gibt die Möglichkeit, das Werkstück bereichsweise mit einem von mehreren Spritzgießwerkzeugen zu umspritzen. Die Spritzgießwerkzeuge können hierbei jeweils einen Formhohlraum definieren, der mit flüssigem Kunststoff befüllbar ist. Die Formhohlräume der verschiedenen Spritzgießwerkzeuge können unterschiedlich gestaltet sein.

Besonders vorteilhaft ist es, wenn jedes der Spritzgießwerkzeuge um eine vertikale Drehachse drehbar ist, denn dies gibt die Möglichkeit, nicht nur unterschiedliche Formhohlräume zur Verfügung zu stellen, sondern diese jeweils auch in programmtechnisch vorgebbaren Drehstellungen auszurichten.

Bevorzugt ist jedes der Spritzgießwerkzeuge um eine vertikale Drehachse kontinuierlich drehbar.

Günstigerweise umfasst die Spritzgießeinheit einen Werkzeugspeicher, der mehrere Spritzgießwerkzeuge aufnimmt, wobei die Spritzgießwerkzeuge aus einer Außerbetriebsstellung in eine Betriebsstellung und zurück bewegbar sind. Der Werkzeugspeicher kann beispielsweise zwei, drei oder vier Spritzgießwerkzeuge aufnehmen.

Von Vorteil ist es, wenn die Spritzgießwerkzeuge im Werkzeugspeicher austauschbar gehalten sind. Dies gibt die Möglichkeit, eine Vielzahl von Spritzgießwerkzeugen bereitzustellen, wobei für die Bearbeitung eines bestimmten Werkstückes ein einziges oder mehrere Spritzgießwerkzeuge in den Werkzeugspeicher eingebracht werden, um für die Bearbeitung des bestimmten Werkstückes in programmtechnisch vorgebbarer Weise Verwendung zu finden.

Bevorzugt sind die Spritzgießwerkzeuge im Werkzeugspeicher jeweils um eine eigene vertikale Drehachse drehbar gelagert. Dies ermöglicht es, die Spritzgießwerkzeuge im Werkzeugspeicher in unterschiedliche Drehstellungen auszurichten. Die Ausrichtung der Spritzgießwerkzeuge ist vorteilhafterweise programmtechnisch vorgebbar.

Günstigerweise umfasst der Werkzeugspeicher mindestens einen Drehantrieb, der mit einem Spritzgießwerkzeug gekoppelt ist. Als Drehantrieb kann beispielsweise ein Schrittmotor oder Servomotor zum Einsatz kommen, mit dessen Hilfe ein zugeordnetes Spritzgießwerkzeug um eine vertikale Drehachse gedreht werden kann. Günstigerweise ist dem Servomotor ein Drehwinkelgeber zugeordnet.

Besonders vorteilhaft ist es, wenn der Werkzeugspeicher mehrere Drehantriebe aufweist, die jeweils mit einem Spritzgießwerkzeug gekoppelt sind. Insbesondere kann vorgesehen sein, dass der Werkzeugspeicher für jedes Spritzgießwerkzeug, das er aufnimmt, einen separaten Drehantrieb umfasst. Die Drehantriebe können beispielsweise als Schrittmotoren oder Servomotoren ausgestaltet sein, insbesondere als Servomotoren mit Drehwinkelgeber.

Der Werkzeugspeicher umfasst bei einer vorteilhaften Ausführungsform der Erfindung mindestens einen Drehtisch oder Revolver, der um eine vertikale Drehachse drehbar ist. Durch Drehen des mindestens einen Drehtisches oder Revolvers kann eines von mehreren Spritzgießwerkzeugen aus einer Außerbetriebsstellung in die Betriebsstellung bewegt werden. Das Spritzgießwerkzeug ist günstigerweise relativ zum Drehtisch oder Revolver um eine eigene Drehachse drehbar und kann dadurch eine von mehren Drehstellungen relativ zum zu bearbeitenden Werkstück einnehmen.

Bei einer besonders bevorzugten Ausführungsform der erfindungsgemäßen Maschine weist das mindestens eine Spritzgießwerkzeug ein Formoberteil und ein Formunterteil auf, wobei das Werkstück mittels der Positioniereinrichtung mit einem gewünschten Werkstückbereich zwischen dem Formoberteil und dem Formunterteil positionierbar ist und wobei das Formoberteil und das Formunterteil synchron um eine vertikale Drehachse drehbar sind. Das Formoberteil und das Formunterteil bilden zwischen sich einen Formhohlraum aus. Das Werkstück kann mit einem gewünschten Werkstückbereich, in dem die Kunststoffummantelung erfolgen soll, zwischen dem Formoberteil und dem Formunterteil positioniert werden. Hierzu ist das Werkstück mit der Positioniereinrichtung gekoppelt. Das Formoberteil und das Formunterteil können synchron um eine gemeinsame vertikale Drehachse gedreht werden, so dass der Formhohlraum programmtechnisch vorgebbare Drehstellungen einnehmen kann und eine Kunststoffummantelung mit einer gewünschten Ausrichtung erzielt werden kann.

Das Formoberteil ist günstigerweise in vertikaler Richtung hin und her bewegbar. Hierzu kann beispielsweise ein Kolben-Zylinderaggregat oder auch ein Spindelantrieb zum Einsatz kommen.

Das Formunterteil ist günstigerweise in vertikaler Richtung unverschieblich an einem Maschinengestell gehalten.

Zum Drehen des Formoberteils und des Formunterteils kann jeweils ein Schrittmotor oder ein Servomotor zum Einsatz kommen, insbesondere ein Servomotor mit Drehwinkelgeber, wobei den jeweiligen Motoren jeweils eine Steuerelektronik zugeordnet ist und die Steuerelektronik des Formoberteils mit der Steuerelektronik des Formunterteils sowie mit der Maschinensteuerung verbunden ist.

Bei einer besonders bevorzugten Ausgestaltung weist die erfindungsgemäße Maschine eine von der Maschinensteuerung steuerbare Laserbearbeitungseinheit auf mit einem Laserbearbeitungskopf, wobei das Werkstück zwischen einem Laserbearbeitungsbereich der Laserbearbeitungseinheit, dem Stanzbearbeitungsbereich der Stanzeinheit und dem Spritzgießbearbeitungsbereich der Spritzgießeinheit hin und her bewegbar und in programmtechnisch vorgebbaren, aufeinander folgenden Bearbeitungsschritten von der Stanzeinheit, der Laserbearbeitungseinheit und der Spritzgießeinheit bearbeitbar ist. Dies gibt die Möglichkeit, das Werkstück nicht nur zu stanzen und mit Kunststoffmaterial zu umspritzen, sondern es kann zusätzlich auch von der Laserbearbeitungseinheit bearbeitet werden. Die Laserbearbeitungseinheit umfasst einen Laserbearbeitungskopf, mit dessen Hilfe ein Laserstrahl erzeugt werden kann, der auf das Werkstück gerichtet werden kann. Das Werkstück kann mittels des Laserstrahls beispielsweise geschnitten oder geschweißt werden.

Von Vorteil ist es, wenn der Laserbearbeitungskopf in mindestens einer Bewegungsrichtung bewegbar ist. Insbesondere kann vorgesehen sein, dass der Laserbearbeitungskopf in zwei senkrecht zueinander ausgerichteten Bewegungsrichtungen bewegbar ist. Dies gibt auf konstruktiv einfache Weise die Möglichkeit, eine komplexe, insbesondere kurvenartige Struktur aus dem Werkstück auszuschneiden. Bevorzugt ist die während einer Bearbeitung des Werkstückes erfolgende Bewegung des Laserbearbeitungskopfes programmtechnisch vorgebbar.

Die erfindungsgemäße Maschine eignet sich insbesondere zur Herstellung von flexiblen, individuell gestaltbaren Stanzgittern aus Blechtafeln. Wie bereits erläutert, kommen derartige Stanzgitter bei elektronischen Baugruppen zum Einsatz. Sie dienen der Stromführung und werden üblicherweise aus einer Blechtafel ausgestanzt und bereichsweise mit Kunststoffmaterial ummantelt. Eine Blechtafel, die vorzugsweise auf ihrer Oberseite in einzelnen Bereichen eine Beschichtung aufweist, kann hierzu in ersten, programmtechnisch vorgebbaren, aufeinander folgenden Bearbeitungsschritten mittels der Stanzeinheit gestanzt werden, wobei entweder ein einziges Stanzwerkzeug oder auch mehrere Stanzwerkzeuge nacheinander zum Einsatz kommen können und wobei das mindestens eine Stanzwerkzeug in den einzelnen Bearbeitungsschritten eine programmtechnisch vorgebbare Drehstellung einnehmen kann.

Dadurch können aus der Blechtafel beispielsweise streifenförmige Bereiche ausgestanzt werden. Diese können anschließend in einzelnen Abschnitten mittels der Spritzgießeinheit mit Kunststoffmaterial umspritzt werden. Hierzu kann ein einziges Spritzgießwerkzeug zum Einsatz kommen oder aber mehrere Spritzgießwerkzeuge in aufeinander folgenden Bearbeitungsschritten, wobei das mindestens eine Spritzgießwerkzeug eine von mehreren programmtechnisch vorgebbare Positionen und Drehstellungen einnehmen kann, so dass mehrere Kunststoffummantelungen erzielt werden können, die jeweils unterschiedlich ausgerichtet sind. In weiteren Bearbeitungsschritten kann dann die Blechtafel erneut mittels der Stanzeinheit gestanzt werden. Beispielsweise können die streifenförmigen Bereiche verlängert werden, die anschließend wiederum mittels der Spritzgießeinrichtung bereichsweise mit Kunststoffmaterial umspritzt werden können. Darüber hinaus kann die Blechtafel in einzelnen Bereichen mittels der Laserbearbeitungseinheit geschnitten oder geschweißt werden. Insbesondere kann in abschließenden Bearbeitungsschritten das vorbereitete, bereichsweise mit Kunststoffmaterial umspritzte Stanzgitter abschließend mittels der Laserbearbeitungseinheit aus der Blechtafel ausgeschnitten werden. Das Stanzgitter kann dann der Maschine entnommen werden.

Die nachfolgende Beschreibung einer bevorzugten Ausführungsform der Erfindung dient im Zusammenhang mit der Zeichnung der näheren Erläuterung. Es zeigen:
- Figur 1:: eine schematische perspektivische Darstellung einer erfindungsgemäßen Maschine zur Bearbeitung von Werkstücken, insbesondere Blechtafeln;
- Figur 2:: eine detailliertere schematische Darstellung der Maschine aus Figur 1;
- Figur 3:: eine schematische Schnittansicht der Maschine entlang der Linie 3-3 in Figur 2;
- Figur 4:: eine schematische Darstellung eines Spritzgießwerkzeuges der Maschine aus Figur 1 bei der Erzeugung einer Kunststoffummantelung zweier Metallstreifen einer Blechtafel und
- Figuren 5 bis 13:: schematische Darstellungen programmtechnisch vorgebbarer Bearbeitungsschritte zur Herstellung eines Stanzgitters mittels der erfindungsgemäßen Maschine.

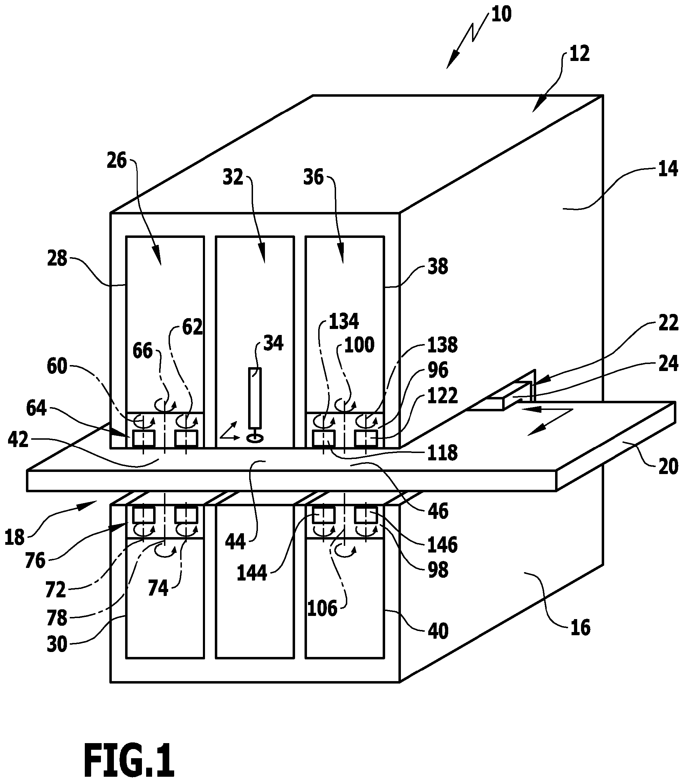

In den Figuren 1 bis 4 ist schematisch eine erfindungsgemäße Maschine zur Bearbeitung von Werkstücken, insbesondere zur Bearbeitung von Blechtafeln dargestellt. Die Maschine ist insgesamt mit dem Bezugszeichen 10 belegt und umfasst ein C-förmiges Maschinengestell 12 mit einem oberen Gestellschenkel 14 und einem unteren Gestellschenkel 16, die zwischen sich einen Arbeitsraum 18 definieren, in den ein plattenförmiges Werkstück, beispielsweise eine Blechtafel 20 eingeführt werden kann. Mittels einer Positioniereinrichtung 22 kann die Blechtafel 20 in einer Horizontalebene in einer ersten Zustellrichtung (X-Achse) und einer senkrecht zur ersten Zustellrichtung ausgerichteten zweiten Zustellrichtung (Y-Achse) hin und her bewegt werden. Die Positioniereinrichtung 22 weist hierzu an sich bekannte und deshalb in der Zeichnung nur schematisch dargestellte Klemmelemente 24 auf, die die Blechtafel 20 erfassen und diese in den beiden Zustellrichtungen bewegen können.

Die Maschine 10 umfasst eine Stanzeinheit 26 mit einem Stanzoberteil 28, das am oberen Gestellschenkel 14 angeordnet ist, und mit einem Stanzunterteil 30, das am unteren Gestellschenkel 16 angeordnet ist.

Die Maschine 10 weist außerdem eine Laserbearbeitungseinheit 32 auf mit einem Laserbearbeitungskopf 34, der am oberen Gestellschenkel 14 in zwei senkrecht zueinander ausgerichteten Bewegungsrichtungen bewegbar gehalten ist.

Die Maschine 10 umfasst darüber hinaus eine Spritzgießeinheit 36 mit einem Spritzgießoberteil 38, das am oberen Gestellschenkel 14 angeordnet ist, und mit einem Spritzgießunterteil 40, das am unteren Gestellschenkel 16 angeordnet ist. Das Stanzoberteil 28 und das Stanzunterteil 30 definieren zwischen sich einen Stanzbearbeitungsbereich 42, unterhalb des Laserbearbeitungskopfes 34 bildet die Laserbearbeitungseinheit 32 einen Laserbearbeitungsbereich 44, und das Spritzgießoberteil 38 und das Spritzgießunterteil 40 definieren zwischen sich einen Spritzgießbearbeitungsbereich 46. Die Blechtafel 20 kann mittels der Positioniereinrichtung 22 in programmtechnisch vorgebbarer Weise zwischen dem Stanzbearbeitungsbereich 42, dem Laserbearbeitungsbereich 44 und dem Spritzgießbearbeitungsbereich 46 hin und her bewegt werden, so dass die Blechtafel 20 in programmtechnisch vorgebbaren, aufeinander folgenden Bearbeitungsschritten in unterschiedlichen Horizontalstellungen mindestens einmal von der Stanzeinheit 26 und mindestens einmal von der Laserbearbeitungseinheit 32 und mindestens einmal von der Spritzgießeinheit 36 bearbeitbar ist.

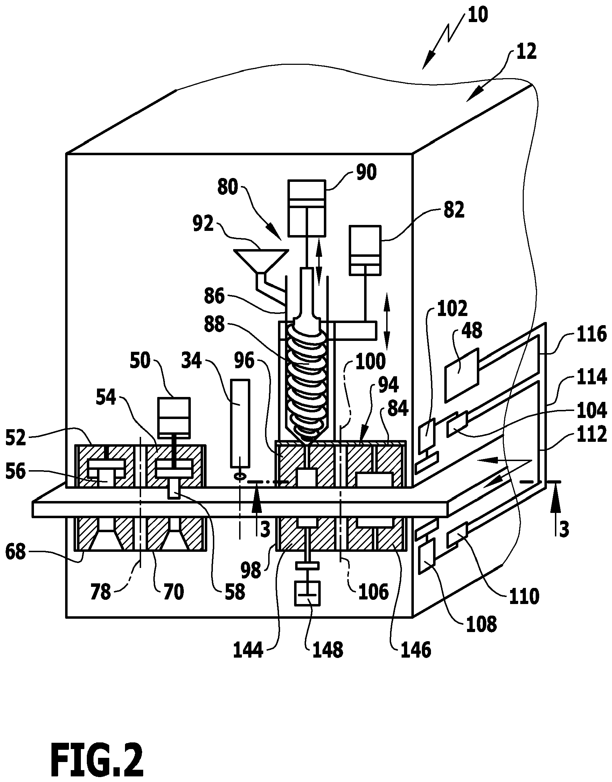

Zu ihrer Steuerung weist die Maschine 10 eine in Figur 2 schematisch dargestellte Maschinensteuerung 48 auf, die vom Benutzer programmierbar ist. Bevorzugt kommt eine CNC-Steuerung zum Einsatz. Die Stanzeinheit 26, die Laserbearbeitungseinheit 32, die Spritzgießeinheit 36 und die Positioniereinrichtung 22 werden von der programmierbaren Maschinensteuerung 48 gesteuert. Durch eine entsprechende Programmierung der Maschinensteuerung 48 kann der Benutzer die einzelnen Bearbeitungsschritte und deren Reihenfolge sowie die Ausrichtung der Blechtafel 20 in den einzelnen Bearbeitungsschritten vorgeben.

In der dargestellten Ausführungsform weist die Stanzeinheit 26 einen Stanzantrieb 50 in Form eines Kolben-Zylinderaggregates auf, der wahlweise mit einem ersten Stanzwerkzeug 52 oder einem zweiten Stanzwerkzeug 54 gekoppelt werden kann. Das erste Stanzwerkzeug 52 umfasst einen ersten Stempel 56 und das zweite Stanzwerkzeug 54 umfasst einen zweiten Stempel 58. Die beiden Stempel 56 und 58 können vom Stanzantrieb 50 in vertikaler Richtung hin und her bewegt werden. Die beiden Stanzwerkzeuge 52, 54 sind jeweils um eine vertikale Drehachse 60 bzw. 62 drehbar in einem Stanzwerkzeughalter 64 gehalten, der seinerseits um eine vertikale Drehachse 66 gedreht werden kann. Durch Drehen des Stanzwerkzeughalters 64 um dessen Drehachse 66 kann wahlweise das erste Stanzwerkzeug 52 mit dem ersten Stempel 56 oder das zweite Stanzwerkzeug 54 mit dem zweiten Stempel 58 fluchtend zum Stanzantrieb 50 ausgerichtet werden, so dass mittels des Stanzantriebes 50 wahlweise der erste Stempel 56 oder der zweite Stempel 58 in vertikaler Richtung hin und her bewegt werden kann. Zum Drehen des Stanzwerkzeughalters 64 kommt vorzugsweise ein Drehantrieb in Form eines Schrittmotors oder eines Servomotors mit Drehwinkelgeber zum Einsatz. Entsprechende Drehantriebe kommen auch für die Drehung des ersten Stanzwerkzeuges 52 um die Drehachse 60 und für die Drehung des zweiten Stanzwerkzeuges 54 um die Drehachse 62 zum Einsatz. Derartige Drehantriebe sind dem Fachmann an sich bekannt und deshalb zur Erzielung einer besseren Übersicht in der Zeichnung nicht dargestellt.

Dem ersten Stempel 56 ist am Stanzunterteil 30 eine erste Matrize 68 zugeordnet und dem zweiten Stempel 58 ist am Stanzunterteil 30 eine zweite Matrize 70 zugeordnet. Die beiden Matrizen 68, 70 sind ebenso wie die beiden Stanzwerkzeuge 52, 54 jeweils um eine Drehachse 72 bzw. 74 drehbar in einem Matrizenhalter 76 gelagert, der seinerseits um eine Drehachse 78 gedreht werden kann. Als Drehantriebe der Matrizen 68, 70 und des Matrizenhalters 76 kommen ebenfalls Schritt- oder Servomotoren mit Drehwinkelgeber zum Einsatz. Der Matrizenhalter 76 kann synchron zum Stanzwerkzeughalter 64 gedreht werden, so dass die erste Matrize 68 fluchtend zum Stanzantrieb 50 ausgerichtet ist, wenn auch der erste Stempel 56 fluchtend zum Stanzantrieb 50 ausgerichtet ist. In entsprechender Weise kann die zweite Matrize 70 fluchtend zum Stanzantrieb 50 ausgerichtet werden, wenn auch der zweite Stempel 58 fluchtend zum Stanzantrieb 50 ausgerichtet ist. Die beiden Matrizen 68, 70 werden in entsprechender Weise wie die beiden Stempel 56, 58 um ihre eigenen Drehachsen 72 bzw. 74 gedreht. Dies gibt die Möglichkeit, durch eine entsprechende Programmierung der Maschinensteuerung 48 die Blechtafel 20 wahlweise mittels des ersten Stempels 56 und der ersten Matrize 68 oder des zweiten Stempels 58 und der zweiten Matrize 70 zu bearbeiten, wobei Stempel und Matrize eine programmtechnisch vorgebbare Drehstellung einnehmen können.

Die Laserbearbeitungseinheit 32 mit dem in zwei senkrecht zueinander ausgerichteten Bewegungsrichtungen bewegbaren Laserbearbeitungskopf 34 ist dem Fachmann an sich bekannt. Sie bedarf daher keiner näheren Erläuterung. Mittels des Laserbearbeitungskopfes 34 kann ein Laserstrahl erzeugt werden, der in vertikaler Richtung auf die Blechtafel 20 gerichtet werden kann. Der Laserbearbeitungskopf 34 kann während der Beaufschlagung der Blechtafel 20 mit Laserstrahlung in zwei senkrecht zueinander ausgerichteten Bewegungsrichtungen bewegt werden. Alternativ oder ergänzend kann vorgesehen sein, dass die Blechtafel 20 während der Laserstrahlbeaufschlagung mittels der Positioniereinrichtung 22 relativ zum Laserbearbeitungskopf bewegbar ist. Die Relativbewegung zwischen Blechtafel 22 und Laserbearbeitungskopf 34 kann durch eine entsprechende Programmierung der Maschinensteuerung vorgegeben werden.

Die Spritzgießeinheit 36 umfasst eine Spritzeinrichtung 80, die mittels eines Kolben-Zylinderaggregates 82 in vertikaler Richtung von einer Schließplatte 84 anhebbar und auf diese absenkbar ist. Die Spritzeinrichtung 80 umfasst in üblicher Weise einen Schneckenzylinder 86, in dem eine Schnecke 88 um ihre Längsachse drehbar und mittels eines Kolben-Zylinderaggregates 90 verschiebbar gehalten ist. Dem Schneckenzylinder 86 kann Kunststoffrohmaterial über einen Einfülltrichter 92 zugeführt werden.

Die Spritzgießeinheit 36 weist darüber hinaus einen Werkzeugspeicher 94 auf, der einen am oberen Gestellschenkel 14 drehbar gelagerten oberen Drehtisch 96 und einen am unteren Gestellschenkel 16 drehbar gelagerten unteren Drehtisch 98 umfasst. Der obere Drehtisch 96 ist um eine vertikal ausgerichtete obere Drehtischachse 100 drehbar. Hierzu wirkt der obere Drehtisch 96 mit einem oberen Drehantrieb in Form eines oberen Schritt- oder Servomotors 102 zusammen, dem eine obere Steuerelektronik 104 zugeordnet ist. Der untere Drehtisch 98 ist um eine fluchtend zur oberen Drehtischachse 100 ausgerichtete untere Drehtischachse 106 drehbar. Hierzu wirkt der untere Drehtisch 98 mit einem unteren Drehantrieb in Form eines unteren Schritt- oder Servomotors 108 zusammen, dem eine untere Steuerelektronik 110 zugeordnet ist. Über eine erste Verbindungsleitung 112 ist die untere Steuerelektronik 110 direkt mit der oberen Steuerelektronik 104 verbunden, und über zusätzliche Verbindungsleitungen 114, 116 sind die obere Steuerelektronik 104 und die untere Steuerelektronik 110 mit der Maschinensteuerung 48 elektrisch verbunden. Mittels der oberen Steuerelektronik 104 und der unteren Steuerelektronik 110 können die beiden Drehtische 96 und 98 des Werkzeugspeichers 94 synchron um die Drehtischachsen 100 und 106 gedreht werden.

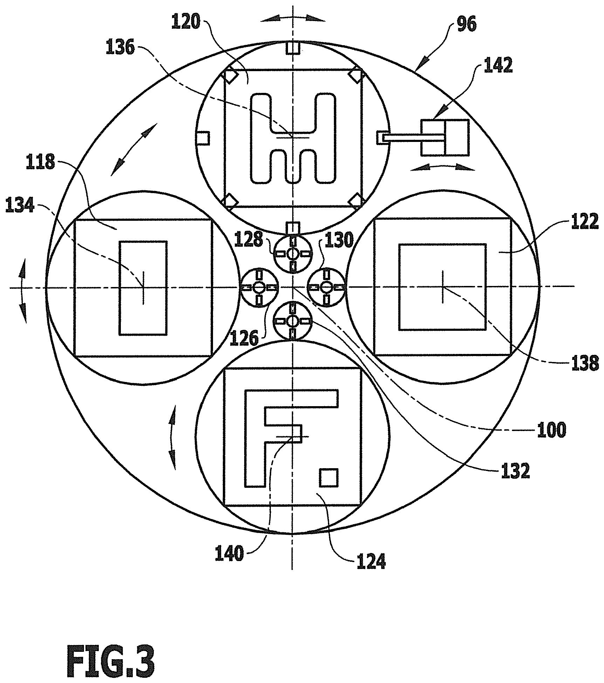

Der Werkzeugspeicher 94 nimmt insgesamt vier Spritzgießwerkzeuge auf, die wahlweise fluchtend zum Schneckenzylinder 86 und zur Schnecke 88 ausgerichtet werden können, so dass mit ihrer Hilfe ein im Spritzgießbearbeitungsbereich 46 angeordneter Bereich der Blechtafel 20 mit Kunststoffmaterial umspritzt werden kann. Die Spritzgießwerkzeuge umfassen jeweils ein Formoberteil und ein Formunterteil, zwischen denen ein zu umspritzender Bereich der Blechtafel 20 in programmtechnisch vorgebbarer Weise positioniert werden kann. Wie aus Figur 3 deutlich wird, nimmt der obere Drehtisch 96 vier unterschiedlich gestaltete Formoberteile 118, 120, 122 und 124 auf. Jedem Formoberteil 118, 120, 122, 124 ist ein separater Drehantrieb 126, 128, 130, 132 zugeordnet in Form eines Schritt- oder Servomotors. Mittels der Drehantriebe können die Formoberteile jeweils um eine eigene Drehachse 134, 136, 138, 140 relativ zum oberen Drehtisch 96 verdreht werden. Die Formoberteile 118, 120, 122, 124 können somit jeweils eine beliebige, programmtechnisch vorgebbare Drehstellung einnehmen. In einigen vorgegebenen Drehstellungen können die Formoberteile 118, 120, 122 und 124 bei einer besonders bevorzugten Ausgestaltung der Erfindung mittels einer Arretiereinrichtung 142 arretiert werden. In Figur 3 ist lediglich eine einzige Arretiereinrichtung 142 dargestellt, die mit dem Formoberteil 120 zusammenwirkt, entsprechende Arretiereinrichtungen 142 können jedoch auch für die Formoberteile 118, 122 und 124 zum Einsatz kommen.

Der untere Drehtisch 98 ist weitgehend identisch ausgebildet wie der obere Drehtisch 96. Er nimmt insgesamt vier Formunterteile auf, die jeweils fluchtend zu einem Formoberteil ausgerichtet sind und die mittels zugeordneter Drehantriebe jeweils um eine eigene Drehachse drehbar sind, wobei die Drehachsen der Formunterteile jeweils mit der Drehachse des zugeordneten Formoberteils fluchten. In der Zeichnung sind lediglich ein erstes Formunterteil 144 und ein zweites Formunterteil 146 dargestellt. Durch Drehen des unteren Drehtisches 98 um die untere Drehtischachse 106 kann jeweils ein Formunterteil fluchtend zum Schneckenzylinder 86 und zur Schnecke 88 ausgerichtet werden. In dieser Stellung wirkt das jeweilige Formunterteil mit einer unterhalb des unteren Drehtisches 98 angeordneten Auswerfereinrichtung 148 zusammen.

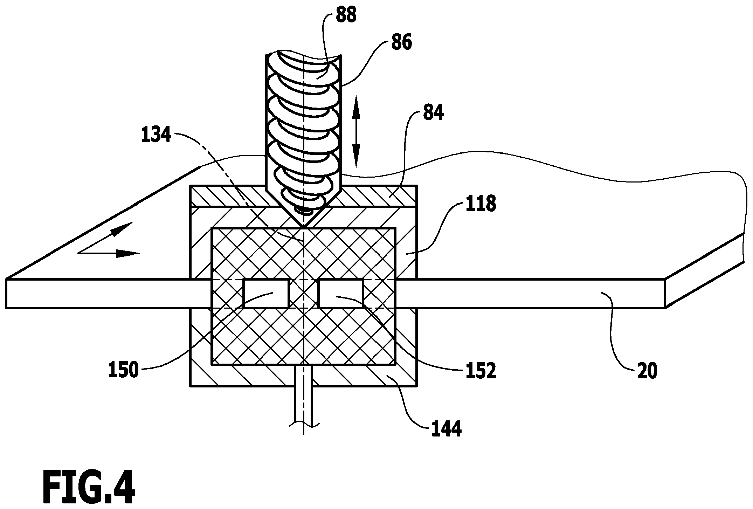

Das Zusammenwirken eines Formoberteils mit einem Formunterteil zur Erzeugung einer Kunststoffummantelung von zwei Metallstreifen 150, 152, die durch Ausstanzen der Blechtafel 20 erzielt wurden, ist in Figur 4 schematisch dargestellt.

Nach Erzielen der Kunststoffummantelung kann zunächst die Spritzeinrichtung 80 und anschließend der obere Drehtisch 96 mit den Formoberteilen 118, 120, 122, 124 angehoben werden, um die Kunststoffummantelung freizugeben, und dann kann die Kunststoffummantelung mittels der Auswerfereinrichtung 148 dem Formunterteil entnommen werden.

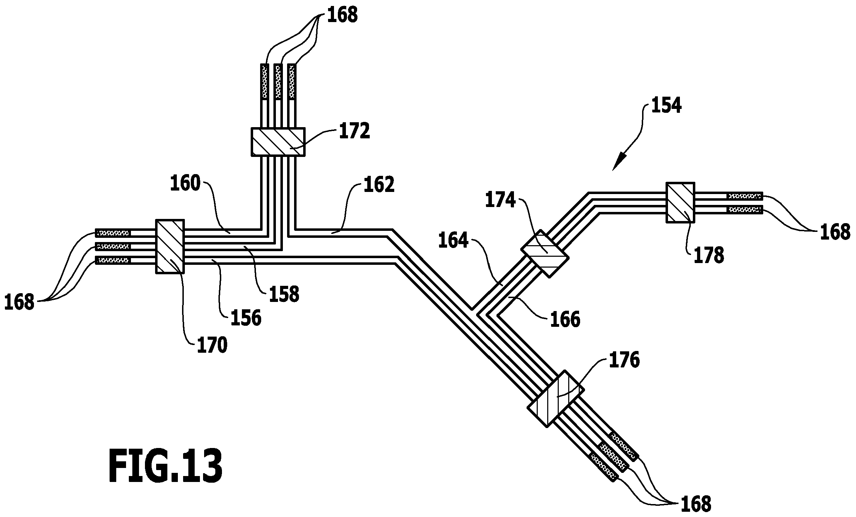

Die Maschine 10 ermöglicht es, die Blechtafel 20 in beliebiger, programmtechnisch vorgebbarer Reihenfolge zu stanzen, zu schneiden und mit Kunststoffmaterial zu umspritzen. Sie eignet sich insbesondere zur Herstellung von Stanzgittern, die zur Stromleitung in elektronischen Baugruppen zum Einsatz kommen können. Ein derartiges Stanzgitter ist in Figur 13 schematisch dargestellt und insgesamt mit dem Bezugszeichen 154 belegt. Es umfasst mehrere Metallstreifen 156 bis 166, die an ihren Enden eine Kontaktbeschichtung 168 tragen und die mit Hilfe von Kunststoffummantelungen 170 bis 178 relativ zueinander fixiert sind.

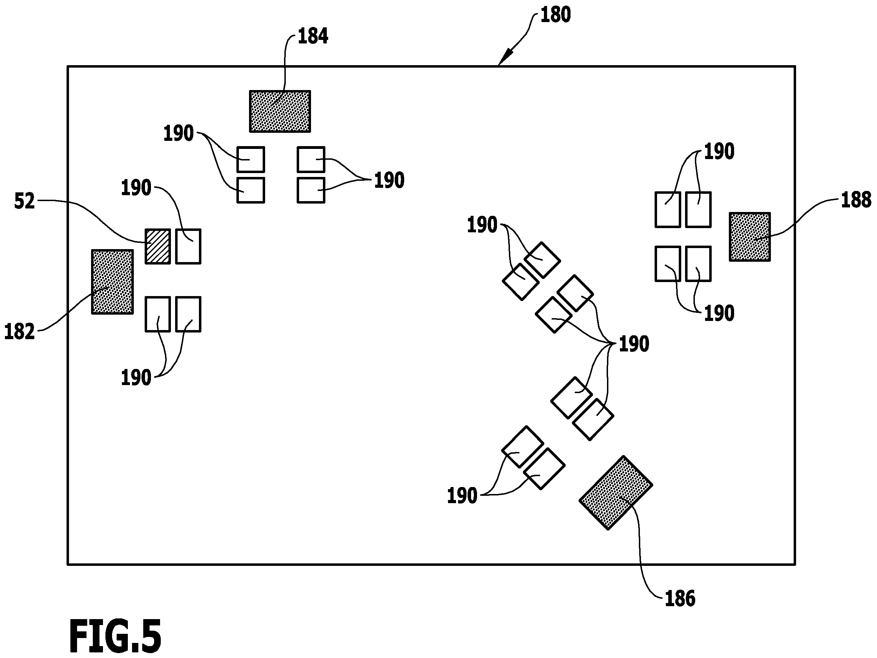

Die Herstellung des Stanzgitters 154 mittels der voranstehend erläuterten Maschine 10 wird nachfolgend unter Bezugnahme auf die Figuren 5 bis 12 näher erläutert.

In einem ersten Bearbeitungsschritt kann eine Blechtafel 180, die auf ihrer Oberseite mehrere Kontaktfelder 182 bis 188 trägt, in den Arbeitsraum 18 der Maschine 10 eingeführt und an der Positioniereinrichtung 22 mittels der Klemmelemente 24 festgelegt werden. Anschließend können dann mittels des ersten Stanzwerkzeuges 52 an programmtechnisch vorgebbaren Bereichen der Blechtafel 180 nacheinander erste Ausstanzungen 190 vorgenommen werden. Hierzu kann die Blechtafel 180 mittels der Positioniereinrichtung 22 in der ersten Zustellrichtung und in der zweiten Zustellrichtung in programtechnisch vorgebbarer Weise bewegt werden und zusätzlich kann das erste Stanzwerkzeug 52 um die Drehachse 60 gedreht werden, so dass die ersten Ausstanzungen 190 unterschiedliche Ausrichtungen aufweisen können, wie dies in Figur 5 erkennbar ist.

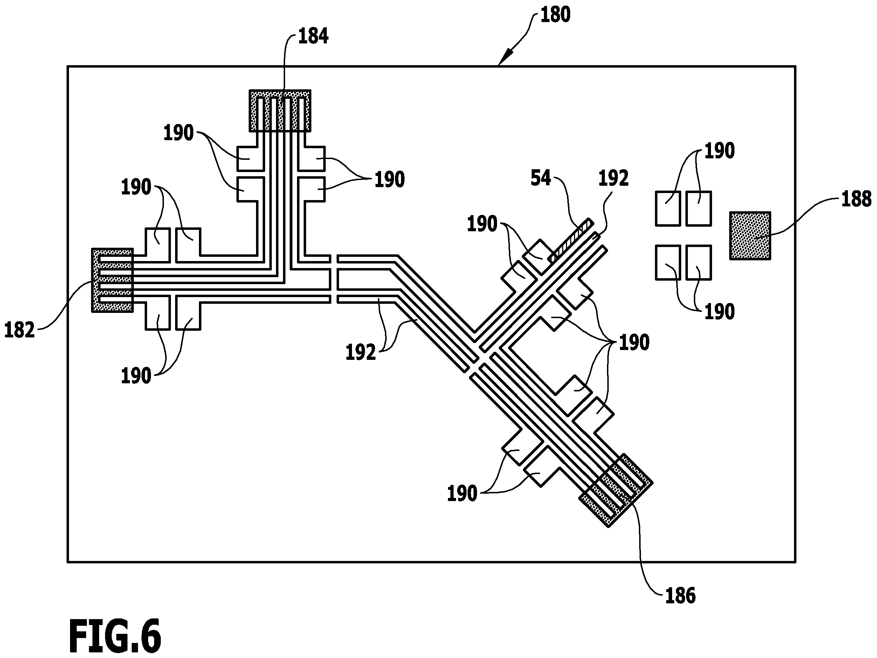

In aufeinander folgenden, durch eine entsprechende Programmierung der Maschinensteuerung 48 vorgebbaren Bearbeitungsschritten können mittels des zweiten Stanzwerkzeuges 54 nacheinander eine Vielzahl zweiter Ausstanzungen 192 erzeugt werden, die sich paarweise überlappen. In Figur 6 ist das zweite Stanzwerkzeug 54 schraffiert dargestellt. Die erzeugten zweiten Ausstanzungen 192 bilden insgesamt eine streifenförmige Kontur aus, die auch die ersten Ausstanzungen 190 mit erfasst. In dem in Figur 6 dargestellten Bearbeitungszustand der Blechtafel 180 erfassen die zweiten Ausstanzungen 192 auch die Kontaktfelder 182, 184 und 186, sie haben aber noch nicht das Kontaktfeld 188 erreicht.

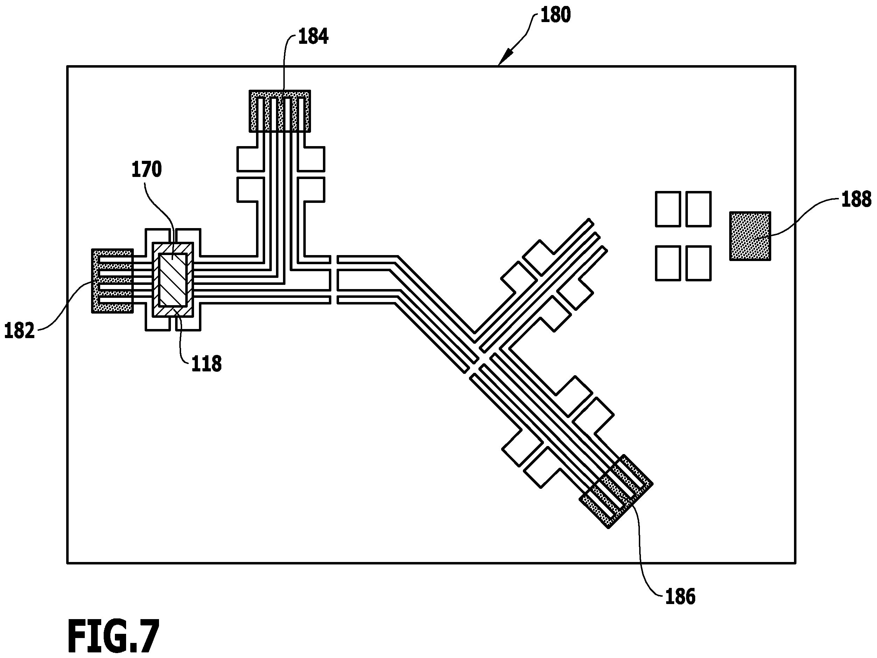

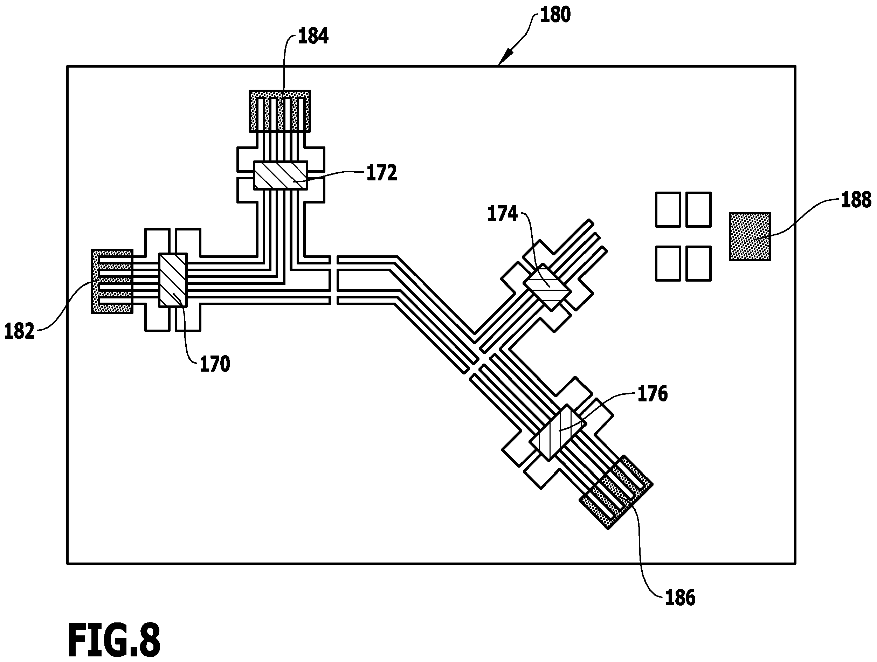

In weiteren programmtechnisch vorgebbaren Bearbeitungsschritten wird die Blechtafel 180 mittels der Positioniereinrichtung 22 so weit im Arbeitsraum 18 in der ersten Zustellrichtung und in der zweiten Zustellrichtung hin und her verschoben, dass einzelne Bereiche der Blechtafel 180 nacheinander eine Position im Spritzgießbearbeitungsbereich 46 einnehmen und mittels der Spritzgießwerkzeuge einzelne Bereiche der Blechtafel 180 mit Kunststoffmaterial umspritzt werden können. Figur 7 zeigt einen Bearbeitungszustand der Blechtafel 180, bei dem im Bereich der dem Kontaktfeld 182 benachbarten ersten Ausstanzungen 190 das Formoberteil 118 und das zugehörige Formunterteil 144 positioniert werden, so dass anschließend in diesem Bereich eine Kunststoffummantelung 170 erzeugt werden kann. Derartige Kunststoffummantelungen werden bei unterschiedlicher Ausrichtung der Spritzgießwerkzeuge im Bereich mehrerer erster Ausstanzungen 190 erzeugt, wie dies in Figur 8 am Beispiel der Kunststoffummantelungen 170 bis 176 dargestellt ist.

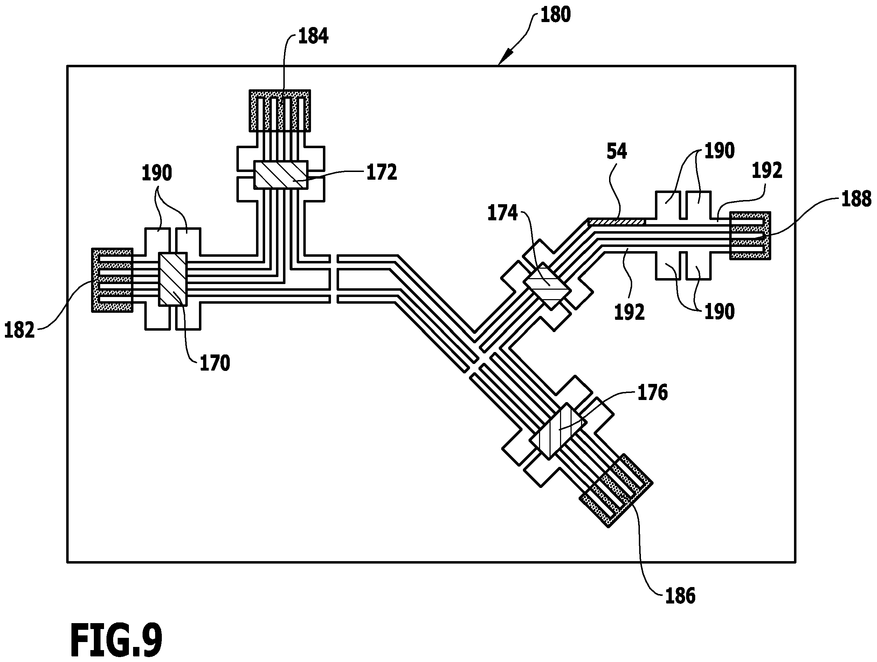

In weiteren programmtechnisch vorgebbaren Bearbeitungsschritten wird die Blechtafel 180 mittels der Positioniereinrichtung 22 so weit verschoben, dass dem Kontaktfeld 188 benachbarte Bereiche nacheinander mittels des zweiten Stanzwerkzeuges 54 bearbeitet werden können zur Erzielung weiterer zweiter Ausstanzungen 192, die nunmehr auch das Kontaktfeld 188 erfassen. Dies ist in Figur 9 dargestellt.

In einem weiteren programmtechnisch vorgebbaren Bearbeitungsschritt wird dann im Bereich der ersten Ausstanzungen 190, die dem Kontaktfeld 188 benachbart angeordnet sind, die noch fehlende Kunststoffummantelung 178 erzeugt mittels der Spritzgießeinheit 36.

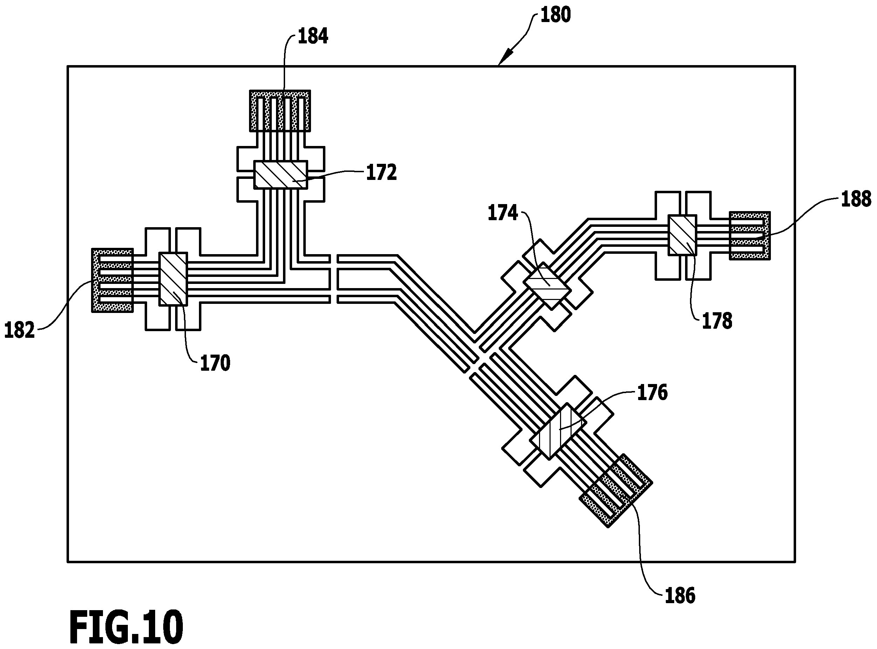

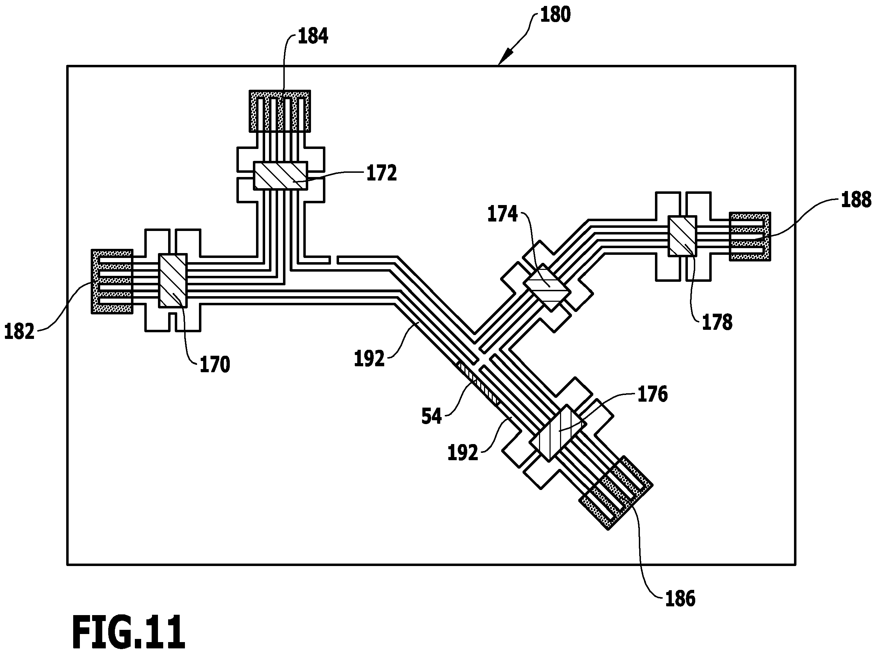

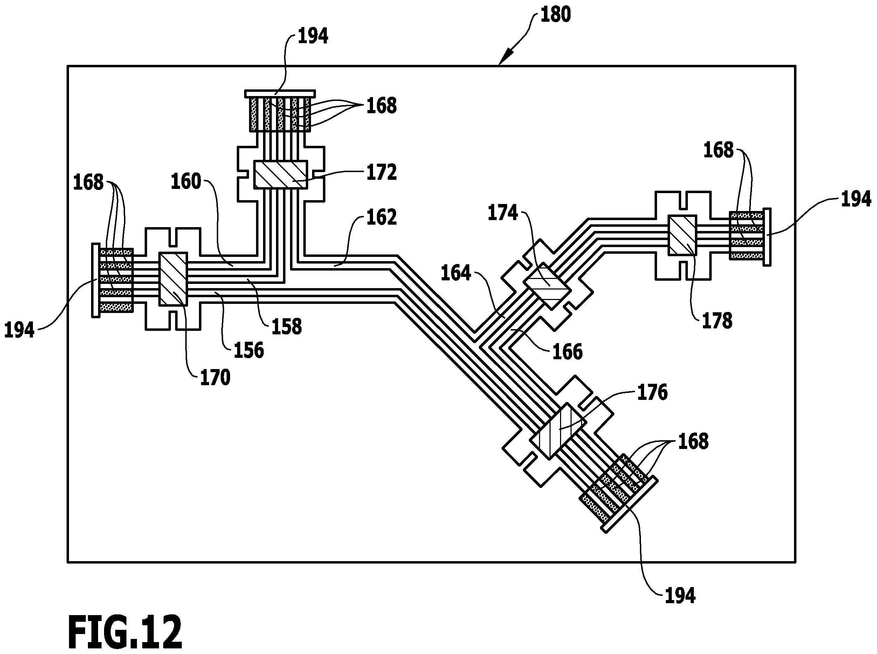

Bis zu dem in Figur 10 dargestellten Bearbeitungszustand der Blechtafel 180 wurden bei den zweiten Ausstanzungen 192 einzelne Bereiche benachbarter Ausstanzungen 192 ausgelassen und auch die ersten Ausstanzungen 190 bildeten zwischen sich Blechstege aus. Diese verbleibenden Blechstege werden in weiteren programmtechnisch vorgebbaren Bearbeitungsschritten entfernt. Hierzu werden mittels des zweiten Stanzwerkzeuges 54 weitere zweite Ausstanzungen 192 vorgenommen, wie dies in Figur 11 dargestellt ist, und in weiteren Bearbeitungsschritten werden mittels der Laserbearbeitungseinheit 32 im Bereich der Kontaktfelder 182, 184, 186 und 188 schlitzförmige Ausnehmungen 194 ausgeschnitten. Dies hat zur Folge, dass die zwischen den ersten Ausstanzungen 190 und den zweiten Ausstanzungen 192 verbleibenden Metallstreifen 156 bis 166 vom Restteil der Blechtafel 180 getrennt sind, wie dies in Figur 12 dargestellt ist. Dies gibt die Möglichkeit, das Stanzgitter 154 vom Restteil der Blechtafel 180 zu trennen.

Die Herstellung eines Stanzgitters erfolgt somit in einfacher Weise, ohne dass teure Werkzeuge zum Einsatz kommen müssen. Die einzelnen Metallstreifen des Stanzgitters können eine beliebige Ausrichtung aufweisen, ohne dass jeweils ein gesondertes Werkzeug bereitgestellt werden muss. Der kombinierte Einsatz der Stanzeinheit 26, der Laserbearbeitungseinheit 32, der Spritzgießeinheit 36 und der Positioniereinrichtung 22 erlaubt somit eine kostengünstige Herstellung eines beliebig gestalteten Stanzgitters. Die Größe des Stanzgitters ist hierbei nicht durch die Größe der zum Einsatz kommenden Werkzeuge limitiert.

## Patentansprüche

1. Maschine zur Bearbeitung von Werkstücken, insbesondere Blechtafeln, mit einer Stanzeinheit (26), die mindestens ein in vertikaler Richtung auf und ab bewegbares Stanzwerkzeug (52, 54) aufweist und einen Stanzbearbeitungsbereich (42) definiert, und mit einer Spritzgießeinheit (36), die mindestens ein Spritzgießwerkzeug aufweist zum bereichsweisen Umspritzen des Werkstückes (20; 180) mit Kunststoffmaterial und die einen Spritzgießbearbeitungsbereich (46) definiert, und mit einer Positioniereinrichtung (22) zum Positionieren des Werkstückes (20; 180) im Stanzbearbeitungsbereich (42) und im Spritzgießbearbeitungsbereich (46), **dadurch gekennzeichnet, dass** die Maschine (10) eine programmierbare Maschinensteuerung (48) aufweist zur Steuerung der Stanzeinheit (26), der Spritzgießeinheit (36) und der Positioniereinrichtung (22), und dass das mindestens eine Stanzwerkzeug (52, 54) um eine vertikale Drehachse (60, 62) drehbar ist zum Bearbeiten des Werkstückes (20; 180) in programmtechnisch vorgebbaren Drehstellungen, und dass das Werkstück (20; 180) mittels der Positioniereinrichtung (22) in einer Horizontalebene in einer ersten Zustellrichtung und einer zweiten Zustellrichtung hin und her bewegbar ist, wobei das Werkstück (20; 180) in programmtechnisch vorgebbaren Horizontalstellungen im Stanzbearbeitungsbereich (42) und im Spritzgießbearbeitungsbereich (46) positionierbar und in programmtechnisch vorgebbaren, aufeinander folgenden Bearbeitungsschritten wiederholt von der Stanzeinheit (26) und von der Spritzgießeinheit (36) bearbeitbar ist.

2. Maschine nach Anspruch 1, **dadurch gekennzeichnet, dass** die Stanzeinheit (26) mindestens zwei Stanzwerkzeuge (52, 54) aufweist, die in vertikaler Richtung auf und ab bewegbar und zwischen einer Betriebsstellung und einer Außerbetriebsstellung hin und her bewegbar und jeweils um eine vertikale Drehachse (60, 62) drehbar sind zum wahlweisen Bearbeiten des Werkstückes (20; 180) in programmtechnisch vorgebbaren Drehstellungen.

3. Maschine nach Anspruch 2, **dadurch gekennzeichnet, dass** mindestens ein Stanzwerkzeug (52, 54) der Stanzeinheit (26) austauschbar ist durch ein Biege- oder Tiefziehwerkzeug, das von der Maschinensteuerung (48) steuerbar ist.

4. Maschine nach Anspruch 1, 2 oder 3, **dadurch gekennzeichnet, dass** das mindestens eine Spritzgießwerkzeug um eine vertikale Drehachse (134, 136, 138, 140) drehbar ist zum bereichsweisen Umspritzen des Werkstückes (20; 180) in programmtechnisch vorgebbaren Drehstellungen.

5. Maschine nach Anspruch 4, **dadurch gekennzeichnet, dass** das mindestens eine Spritzgießwerkzeug um die vertikale Drehachse (134, 136, 138, 140) kontinuierlich drehbar ist.

6. Maschine nach einem der voranstehenden Ansprüche, **dadurch gekennzeichnet, dass** die Spritzgießeinheit (26) mindestens zwei Spritzgießwerkzeuge aufweist, die zwischen einer Betriebsstellung und einer Außerbetriebsstellung hin und her bewegbar sind zum wahlweisen Umspritzen eines Werkstückbereiches.

7. Maschine nach Anspruch 6, **dadurch gekennzeichnet, dass** jedes der Spritzgießwerkzeuge um eine vertikale Drehachse (134, 136, 138, 140) drehbar ist.

8. Maschine nach einem der voranstehenden Ansprüche, **dadurch gekennzeichnet, dass** die Spritzgießeinheit (26) einen Werkzeugspeicher (94) aufweist, der mehrere Spritzgießwerkzeuge aufnimmt, wobei die Spritzgießwerkzeuge aus einer Außerbetriebsstellung in eine Betriebsstellung und zurück bewegbar sind.

9. Maschine nach Anspruch 8, **dadurch gekennzeichnet, dass** die Spritzgießwerkzeuge im Werkzeugspeicher (94) austauschbar gehalten sind.

10. Maschine nach Anspruch 8 oder 9, **dadurch gekennzeichnet, dass** die Spritzgießwerkzeuge im Werkzeugspeicher (94) jeweils um eine eigene vertikale Drehachse (134, 136, 138, 140) drehbar gelagert sind.

11. Maschine nach Anspruch 10, **dadurch gekennzeichnet, dass** der Werkzeugspeicher (94) mindestens einen Drehantrieb (126, 128, 130, 132) aufweist, der mit einem Spritzgießwerkzeug gekoppelt ist.

12. Maschine nach Anspruch 11, **dadurch gekennzeichnet, dass** der Werkzeugspeicher (94) mehrere Drehantriebe (126, 128, 130, 132) aufweist, die jeweils mit einem Spritzgießwerkzeug gekoppelt sind.

13. Maschine nach einem der Ansprüche 8 bis 12, **dadurch gekennzeichnet, dass** der Werkzeugspeicher (94) mindestens einen Drehtisch (96, 98) oder Revolver aufweist, der um eine vertikale Drehachse (100, 106) drehbar ist.

14. Maschine nach einem der voranstehenden Ansprüche, **dadurch gekennzeichnet, dass** das mindestens eine Spritzgießwerkzeug ein Formoberteil (118, 120, 122, 124) und ein Formunterteil (144, 146) aufweist, wobei das Werkstück (20; 180) mittels der Positioniereinrichtung (22) zwischen dem Formoberteil (118, 120, 122, 124) und dem Formunterteil (144, 146) positionierbar ist, und wobei des Formoberteil (118, 120, 122, 124) und das Formunterteil (144, 146) synchron um eine gemeinsame vertikale Drehachse (134, 136, 138, 140) drehbar sind.

15. Maschine nach einem der voranstehenden Ansprüche, **dadurch gekennzeichnet, dass** die Maschine (10) eine von der Maschinensteuerung (48) steuerbare Laserbearbeitungseinheit (32) aufweist mit einem Laserbearbeitungskopf (34), wobei das Werkstück (20; 180) zwischen einem Laserbearbeitungsbereich (44) der Laserbearbeitungseinheit (32), dem Stanzbearbeitungsbereich (42) der Stanzeinheit (26) und dem Spritzgießbearbeitungsbereich (46) der Spritzgießeinheit (36) wahlweise hin und her bewegbar und in programmtechnisch vorgebbaren, aufeinander folgenden Bearbeitungsschritten von der Stanzeinheit (26), von der Laserbearbeitungseinheit (32) und von der Spritzgießeinheit (36) bearbeitbar ist.

16. Maschine nach Anspruch 15, **dadurch gekennzeichnet, dass** der Laserbearbeitungskopf (34) in mindestens einer Bewegungsrichtung bewegbar ist.

17. Maschine nach Anspruch 16, **dadurch gekennzeichnet, dass** der Laserbearbeitungskopf (34) in zwei senkrecht zueinander ausgerichteten Bewegungsrichtungen bewegbar ist.

## Claims

1. Machine for processing workpieces, in particular, sheet-metal plates, with a punching unit (26) which comprises at least one punching tool (52, 54) movable up and down in the vertical direction and defines a punch processing area (42), and with an injection molding unit (36) which comprises at least one injection molding tool for injection molding plastic material around areas of the workpiece (20; 180) and defines an injection-mold processing area (46), and with a positioning device (22) for positioning the workpiece (20; 180) in the punch processing area (42) and in the injection-mold processing area (46), **characterized in that** the machine (10) comprises a programmable machine controller (48) for controlling the punching unit (26), the injection molding unit (36) and the positioning device (22), and **in that** the at least one punching tool (52, 54) is rotatable about a vertical axis of rotation (60, 62) for processing the workpiece (20; 180) in rotational positions specifiable by programming, and **in that** the workpiece (20; 180) is movable back and forth in a horizontal plane in a first feed direction and a second feed direction by means of the positioning device (22), the workpiece (20; 180) being positionable in horizontal positions specifiable by programming in the punch processing area (42) and in the injection-mold processing area (46) and being repeatedly processable by the punching unit (26) and by the injection molding unit (36) in successive processing steps specifiable by programming.

2. Machine in accordance with claim 1, **characterized in that** the punching unit (26) comprises at least two punching tools (52, 54) which are movable up and down in the vertical direction and are movable back and forth between an operating position and an inoperative position and are each rotatable about a vertical axis of rotation (60, 62) for selectively processing the workpiece (20; 180) in rotational positions specifiable by programming.

3. Machine in accordance with claim 2, **characterized in that** at least one punching tool (52, 54) of the punching unit (26) is exchangeable for a bending tool or a deep-drawing tool which is controllable by the machine controller (48).

4. Machine in accordance with claim 1, 2 or 3, **characterized in that** the at least one injection molding tool is rotatable about a vertical axis of rotation (134, 136, 138, 140) for injection molding around areas of the workpiece (20; 180) in rotational positions specifiable by programming.

5. Machine in accordance with claim 4, **characterized in that** the at least one injection molding tool is continuously rotatable about the vertical axis of rotation (134, 136, 138, 140).

6. Machine in accordance with any one of the preceding claims, **characterized in that** the injection molding unit (26) comprises at least two injection molding tools which are movable back and forth between an operating position and an inoperative position for selectively injection molding around an area of a workpiece.

7. Machine in accordance with claim 6, **characterized in that** each of the injection molding tools is rotatable about a vertical axis of rotation (134, 136, 138, 140).

8. Machine in accordance with any one of the preceding claims, **characterized in that** the injection molding unit (26) comprises a tool store (94) which accommodates several injection molding tools, the injection molding tools being movable from an inoperative position into an operating position and back.

9. Machine in accordance with claim 8, **characterized in that** the injection molding tools are held so as to be exchangeable in the tool store (94).

10. Machine in accordance with claim 8 or 9, **characterized in that** the injection molding tools are mounted in the tool store (94) so as to each be rotatable about its own vertical axis of rotation (134, 136, 138, 140).

11. Machine in accordance with claim 10, **characterized in that** the tool store (94) comprises at least one rotary drive (126, 128, 130, 132) which is coupled to an injection molding tool.

12. Machine in accordance with claim 11, **characterized in that** the tool store (94) comprises several rotary drives (126, 128, 130, 132) which are each coupled to an injection molding tool.

13. Machine in accordance with any one of claims 8 to 12, **characterized in that** the tool store (94) comprises at least one rotary table (96, 98) or revolver which is rotatable about a vertical axis of rotation (100, 106).

14. Machine in accordance with any one of the preceding claims, **characterized in that** the at least one injection molding tool comprises an upper mold part (118, 120, 122, 124) and a lower mold part (144, 146), the workpiece (20; 180) being positionable between the upper mold part (118, 120, 122, 124) and the lower mold part (144, 146) by means of the positioning device (22), and the upper mold part (118, 120, 122, 124) and the lower mold part (144, 146) being synchronously rotatable about a common vertical axis of rotation (134, 136, 138, 140).

15. Machine in accordance with any one of the preceding claims, **characterized in that** the machine (10) comprises a laser machining unit (32) controllable by the machine controller (48) and provided with a laser machining head (34), the workpiece (20; 180) being selectively movable back and forth between a laser processing area (44) of the laser machining unit (32), the punch processing area (42) of the punching unit (26) and the injection-mold processing area (46) of the injection molding unit (36) and being processable by the punching unit (26), by the laser machining unit (32) and by the injection molding unit (36) in successive processing steps specifiable by programming.

16. Machine in accordance with claim 15, **characterized in that** the laser machining head (34) is movable in at least one direction of movement.

17. Machine in accordance with claim 16, **characterized in that** the laser machining head (34) is movable in two directions of movement aligned perpendicularly to each other.

## Revendications

1. Machine d'usinage de pièces, en particulier de plaques de tôle, comprenant une unité de poinçonnage (26), qui comporte au moins un outil de poinçonnage (52, 54) montant et descendant dans le sens vertical et qui définit une zone d'usinage par poinçonnage (42), et comprenant une unité de moulage par injection (36), qui comprend au moins un outil de moulage par injection servant à surmouler par endroits la pièce (20 ; 180) d'une matière plastique et qui définit une zone d'usinage par moulage par injection (46), et un dispositif de positionnement (22) servant à positionner la pièce (20 ; 180) dans la zone d'usinage par poinçonnage (42) et dans la zone d'usinage par moulage par injection (46), **caractérisée en ce que** la machine (10) comprend une commande de machine (48) programmable servant à commander l'unité de poinçonnage (26), l'unité de moulage par injection (36) et le dispositif de positionnement (22), et **en ce que** l'outil ou les outils de poinçonnage (52, 54) peuvent être amenés en rotation autour d'un axe de rotation vertical (60, 62) pour usiner la pièce (20 ; 180) dans des positions de rotation programmables, et **en ce que** la pièce (20 ; 180) peut être animée d'un mouvement de va-et-vient au moyen du dispositif de positionnement (22) dans un plan horizontal, dans une première direction d'avance et dans une deuxième direction d'avance, la pièce (20 ; 180) pouvant être placée dans des positions horizontales programmables dans la zone d'usinage par poinçonnage (42) et dans la zone d'usinage par moulage par injection (46), et pouvant être usinée à plusieurs reprises par l'unité de poinçonnage (26) et l'unité de moulage par injection (36) au cours d'étapes d'usinage successives programmables.

2. Machine selon la revendication 1, **caractérisée en ce que** l'unité de poinçonnage (26) comprend au moins deux outils de poinçonnage (52, 54), qui montent et descendent dans le sens vertical et sont animés d'un mouvement de va-et-vient entre une position de service et une position hors service et qui, dans chaque cas, peuvent être amenés en rotation autour d'un axe de rotation vertical (60, 62) pour l'usinage sélectif de la pièce (20 ; 180) dans des positions de rotation programmables.

3. Machine selon la revendication 2, **caractérisée en ce qu'**au moins un outil de poinçonnage (52, 54) de l'unité de poinçonnage (26) peut être remplacé par un outil de pliage ou d'emboutissage profond, qui peut être commandé par la commande de machine (48).

4. Machine selon la revendication 1, 2 ou 3, **caractérisée en ce que** l'outil ou les outils de moulage par injection peuvent tourner autour d'un axe de rotation vertical (134, 136, 138, 140) pour le surmoulage par endroits de la pièce (20 ; 180) dans des positions de rotation programmables.

5. Machine selon la revendication 4, **caractérisée en ce que** l'outil ou les outils de moulage par injection peuvent être amenés en rotation en continu autour de l'axe de rotation vertical (134, 136, 138, 140).

6. Machine selon l'une quelconque des revendications précédentes, **caractérisée en ce que** l'unité de moulage par injection (26) comprend au moins deux outils de moulage par injection qui peuvent être animés d'un mouvement de va-et-vient entre une position de service et une position hors service pour le surmoulage sélectif d'une zone de la pièce.

7. Machine selon la revendication 6, **caractérisée en ce que** chacun des outils de moulage par injection peut être amené en rotation autour d'un axe de rotation vertical (134, 136, 138, 140).

8. Machine selon l'une quelconque des revendications précédentes, **caractérisée en ce que** l'unité de moulage par injection (26) comprend un magasin d'outils (94), qui loge plusieurs outils de moulage par injection, les outils de moulage par injection pouvant se déplacer d'une position hors service dans une position de service et inversement.

9. Machine selon la revendication 8, **caractérisée en ce que** les outils de moulage par injection sont retenus de manière interchangeable dans le magasin d'outils (94).

10. Machine selon la revendication 8 ou 9, **caractérisée en ce que** les outils de moulage par injection sont montés dans le magasin d'outils (94) de manière à pouvoir tourner chacun autour d'un axe de rotation vertical (134, 136, 138, 140) propre.

11. Machine selon la revendication 10, **caractérisée en ce que** le magasin d'outils (94) comprend au moins un entraînement en rotation (126, 128, 130, 132) qui est accouplé à un outil de moulage par injection.

12. Machine selon la revendication 11, **caractérisée en ce que** le magasin d'outils (94) comprend plusieurs entraînements en rotation (126, 128, 130, 132) qui sont accouplés chacun à un outil de moulage par injection.

13. Machine selon l'une quelconque des revendications 8 à 12, **caractérisée en ce que** le magasin d'outils (94) comprend au moins une table tournante (96, 98) ou une tourelle qui peut être amené en rotation autour d'un axe de rotation vertical (100, 106).

14. Machine selon l'une quelconque des revendications précédentes, **caractérisée en ce que** l'outil ou les outils de moulage par injection présentent une partie supérieure de moule (118, 120, 122, 124) et une partie inférieure de moule (144, 146), la pièce (20 ; 180) pouvant être placée au moyen du dispositif de positionnement (22) entre la partie supérieure de moule (118, 120, 122, 124) et la partie inférieure de moule (144, 146), et la partie supérieure de moule (118, 120, 122, 124) et la partie inférieure de moule (144, 146) pouvant être amenées en rotation de manière synchrone autour d'un axe de rotation vertical (134, 136, 138, 140) commun.

15. Machine selon l'une quelconque des revendications précédentes, **caractérisée en ce que** la machine (10) comprend une unité d'usinage au laser (32) pouvant être commandée par la commande de machine (48) et pourvue d'une tête d'usinage au laser (34), la pièce (20 ; 180) pouvant être sélectivement animée d'un mouvement de va-et-vient entre une zone d'usinage au laser (44) de l'unité d'usinage au laser (32), la zone d'usinage par poinçonnage (42) de l'unité de poinçonnage (26) et la zone d'usinage par moulage par injection (46) de l'unité de moulage par injection (36) et pouvant être usinée par l'unité de poinçonnage (26), l'unité d'usinage au laser (32) et l'unité de moulage par injection (36) au cours d'étapes d'usinage successives programmables.

16. Machine selon la revendication 15, **caractérisée en ce que** la tête d'usinage au laser (34) peut être déplacée dans au moins un sens de mouvement.

17. Machine selon la revendication 16, **caractérisée en ce que** la tête d'usinage au laser (34) peut être déplacée dans deux sens de mouvement orientés perpendiculairement l'un à l'autre.
